# EUROPÄISCHE PATENTANMELDUNG

(11) **EP 3 399 133 A1**
(43) Veröffentlichungstag der Anmeldung: **07.11.2018**
(21) Anmeldenummer: 18169330.0
(22) Anmeldetag: 25.04.2018
(51) Int. Cl.: E06C 5/18, B63B 27/14

(54) **VORRICHTUNG UND VERFAHREN ZUR BEREITSTELLUNG EINER STEIGHILFE**

(30) Priorität: 04.05.2017 AT 503612017
(71) Anmelder: Heinz Ehgartner Gesellschaft m.b.h., 8700 Leoben (AT)
(72) Erfinder: Auf, Wolfgang, 8010 Graz (AT)
(74) Vertreter: Wirnsberger & Lerchbaum Patentanwälte OG

(57) **Zusammenfassung**

Die Erfindung betrifft eine Vorrichtung (1) zur Bereitstellung einer Steighilfe, umfassend eine Steighilfe und eine translatorisch bewegbare Zug-Schub-Einrichtung, wobei die Steighilfe mit der Zug-Schub-Einrichtung in Verbindung steht, um die Steighilfe ein- und auszufahren, wobei die Zug-Schub-Einrichtung einen Motor aufweist, welcher mit einem Antriebsmittel verbunden ist.

Des Weiteren betrifft die Erfindung ein Verfahren zum Ein- und Ausfahren einer Steighilfe, wobei eine Zug-Schub-Einrichtung mittels Motor translatorisch bewegt wird, wobei die Steighilfe gezogen bzw. geschoben wird und der Motor mit der Zug-Schub-Einrichtung mitbewegt wird.

## Beschreibung

Die Erfindung betrifft eine Vorrichtung zur Bereitstellung einer Steighilfe, umfassend eine Steighilfe und eine translatorisch bewegbare Zug-Schub-Einrichtung, wobei die Steighilfe mit der Zug-Schub-Einrichtung in Verbindung steht, um die Steighilfe ein- und auszufahren.

Des Weiteren betrifft die Erfindung ein Verfahren zum Ein- und Ausfahren einer Steighilfe.

Vorrichtungen zur Bereitstellung einer Steighilfe sind aus dem Stand der Technik bekannt. Auf Wasserfahrzeugen wie etwa Schiffen, Jachten oder Booten werden solche Vorrichtungen insbesondere zum Ein- bzw. Ausfahren von Gangways, Badeleitern oder Treppen eingesetzt. Hierfür werden üblicherweise hydraulisch arbeitende Vorrichtungen verwendet. Nachteilig ist bei solchen Vorrichtungen, dass diese besonders fehleranfällig sind sowie gegebenenfalls eine aufwendige Wartung benötigen.

Hier setzt die Erfindung an. Aufgabe der Erfindung ist es, eine Vorrichtung der eingangs genannten Art anzugeben, mit welcher eine Fehleranfälligkeit minimiert und ein Wartungsaufwand reduziert ist.

Ein weiteres Ziel ist es, ein Verfahren der eingangs genannten Art anzugeben, bei welchem eine Fehleranfälligkeit minimiert sowie ein Wartungsaufwand reduziert ist.

Die Aufgabe wird erfindungsgemäß dadurch gelöst, dass bei einer Vorrichtung der eingangs genannten Art die Zug-Schub-Einrichtung einen Motor aufweist, welcher mit einem Antriebsmittel verbunden ist.

Ein mit der Erfindung erzielter Vorteil ist insbesondere darin zu sehen, dass der Motor mit der translatorisch bewegbaren Zug-Schub-Einrichtung mitbewegt wird. Dadurch ist der Motor, welcher mit Vorteil als Elektromotor ausgebildet ist, für eine allfällige Wartung gut zugänglich. Ferner ist die Steighilfe bei einer auftretenden Fehlfunktion des Motors manuell bewegbar.

Die Steighilfe ist mit Vorteil zur Überbrückung von Höhendifferenzen ausgebildet, insbesondere als Leiter, Treppe oder Gangway.

Es ist günstig, wenn die Zug-Schub-Einrichtung eine Vielzahl von Rädern aufweist. Diese Räder reduzieren einen Widerstand im Vergleich zu einer Gleitreibung und ermöglichen eine im Wesentlichen wartungsfreie translatorische Bewegung der Zug-Schub-Einrichtung. Alternativ kann die Zug-Schub-Einrichtung auch als Schlitten ausgebildet sein.

Ein weiterer Vorteil ist gegeben, wenn ein ortsfestes Vorschubelement vorgesehen ist, welches starr ausgebildet ist, wobei das Antriebsmittel mit dem Vorschubelement zusammenwirkt. Das starr ausgebildete Vorschubelement kann beispielsweise eine Zahnstange sein. Alternativ kann das Vorschubelement beweglich und flexibel ausgebildet sein, beispielsweise als Kette. Ein starr ausgebildetes Vorschubelement weist allerdings eine höhere Stabilität, insbesondere bei Temperaturschwankungen, auf. Große Temperaturschwankungen können beispielsweise auf Wasserfahrzeugen, wie beispielsweise Booten oder Jachten, vorkommen, wobei die Temperatur nachts beispielsweise auf unter 20 °C sinkt und tagsüber durch Sonneneinstrahlung auf über 50 °C steigen kann. Solche Temperaturschwankungen können zur temperaturbedingten Ausdehnung bzw. Kontraktion eines Vorschubelementes führen, was insbesondere bei einer flexiblen Ausführung des Vorschubelementes dazu führen kann, dass der Antrieb unrund läuft bzw. nicht funktioniert. Ein derartiger Temperatureffekt ist bei einem starren Vorschubelement vermieden bzw. minimiert. Ferner kann beispielsweise bei Wasserfahrzeugen Wasser, insbesondere Salzwasser, in den Bereich der Zug-Schub-Einrichtung eindringen, weshalb eine Gefahr von Salzablagerungen und Korrosion besteht. Ein Zusammenwirken eines Zahnrades mit einer starr ausgebildeten Zahnstange ermöglicht ein selbstständiges Abkratzen etwaiger Salzablagerungen, wodurch eine Korrosionsbeständigkeit erhöht ist. Eine derartige Vorrichtung ist diesbezüglich selbstreinigend. Falls die Steighilfe im Fall einer Fehlfunktion des Motors manuell eingefahren werden muss, so ist dies bei einer starren Ausbildung des Vorschubelementes problemlos möglich.

Es ist vorteilhaft, wenn zumindest ein Verbindungselement vorgesehen ist, welches mit der Steighilfe beweglich in Verbindung steht. Für eine bewegliche Verbindung kann beispielsweise eine Drehwelle oder ein Gelenk an der Steighilfe vorgesehen sein. Eine bewegliche Verbindung ermöglicht ein Kippen der Steighilfe während des Ein- bzw. Ausfahrens, wodurch die Steighilfe beispielsweise in umgebendes Wasser geführt werden kann, wie dies etwa einer Badeleiter bei einer Jacht oder einem Boot gewünscht ist. Ferner kann somit eine Höhendifferenz überbrückt werden, wie diese beispielsweise zwischen einem Wasserfahrzeug und einer Anlegestelle oder einer Kaimauer bestehen kann.

Zweckmäßig ist es, wenn das zumindest eine Verbindungselement die Steighilfe mit der Zug-Schub-Einrichtung verbindet, wobei das zumindest eine Verbindungselement beweglich an der Zug-Schub-Einrichtung gelagert ist. Für eine solche bewegliche Lagerung kann beispielsweise eine Drehwelle oder ein Gelenk an der Zug-Schub-Einrichtung vorgesehen sein. Eine derartige bewegliche Lagerung ermöglicht wiederum ein Kippen der Steighilfe während des Ein- bzw. Ausfahrens.

Ein weiterer Vorteil ist dann gegeben, wenn zumindest ein Führungselement zur Führung der Zug-Schub-Einrichtung und/oder der Steighilfe vorgesehen ist. Dadurch kann die Zug-Schub-Einrichtung und/oder die Steighilfe derart fixiert sein, sodass lediglich eine lineare Bewegung, insbesondere in einer Dimension, also vor und zurück, ermöglicht ist. Ferner ist beim Einfahren der Steighilfe gewährleistet, dass diese in eine im Wesentlichen horizontale Lage gebracht wird.

Es ist weiter vorteilhaft, wenn die Steighilfe und/oder die Zug-Schub-Einrichtung in das zumindest eine Führungselement eingreift. Dadurch kann insbesondere eine Absicherung gegen eine Auf- und Abbewegung verstärkt sein, wodurch auch ein Betrieb bei Seegang der Stärke drei oder darüber, also beispielsweise bei leicht bewegter See, ermöglicht ist. Eine derartige Ausbildung gewährleistet ein festes Eingreifen bzw. Zusammenwirken des Antriebsmittels und des Vorschubelementes.

Es ist günstig, wenn zumindest an einem Ende der Führungselemente ein Anschlag vorgesehen ist. Dadurch ist eine Endposition definiert und die Steighilfe kann beispielsweise gegen ein zu weites Ausfahren abgesichert werden.

Es ist weiter vorteilhaft, wenn zumindest eine Umlenkrolle vorgesehen ist, welche zur Auflage der Steighilfe positioniert ist. Diese Umlenkrolle ermöglicht ein sanftes Kippen der Steighilfe während des Ein- bzw. Ausfahrens.

Es ist weiter vorteilhaft, wenn zumindest eine Lasche vorgesehen ist, welche oberhalb der Steighilfe positioniert ist. Diese insbesondere starre Lasche kann beispielsweise aus rostfreiem Stahl gefertigt sein. Diese zumindest eine Lasche kann beispielsweise der Fixierung der Steighilfe dienen.

Um die Steighilfe nach dem Ausfahren in einer gewünschten Position zu fixieren, ist es vorteilhaft, wenn eine Fixierung für die Steighilfe vorgesehen ist. Alternativ können auch mehrere Fixierungen oder Einrichtungen zur Fixierung der Steighilfe vorgesehen sein.

Es ist weiter vorteilhaft, wenn ein Gehäuse vorgesehen ist, in welchem die Zug-Schub-Einrichtung angeordnet ist. Dieses Gehäuse kann beispielsweise rundum verschlossen ausgebildet sein, wobei dieses einen vorzugsweise verschließbaren Zugang für die Steighilfe aufweist. Dadurch kann beispielsweise die Vorrichtung vor Spritzwasser geschützt sein. Alternativ kann das Gehäuse auch lediglich als Gerüst ausgebildet sein, welches zur Fixierung diverser Komponenten, wie beispielsweise der Führungselemente, dient. Die translatorische Bewegung der Zug-Schub-Einrichtung ist hierbei als Bewegung relativ zum Gehäuse zu verstehen.

Ein weiterer Vorteil ist dann gegeben, wenn die Steighilfe unter Ausnutzung der Schwerkraft um eine Achse kippbar ist. Dadurch ist gewährleistet, dass beispielsweise zum Absenken einer Leiter ins Wasser keine zusätzliche Vorrichtung, wie beispielsweise eine hydraulische Vorrichtung, benötigt wird.

Es ist zweckmäßig, wenn ein Wasserfahrzeug eine erfindungsgemäße Vorrichtung aufweist.

Das weitere Ziel der Erfindung wird mit einem Verfahren der eingangs genannten Art erreicht, wobei eine Zug-Schub-Einrichtung mittels Motor translatorisch bewegt wird, wobei die Steighilfe gezogen bzw. geschoben wird und der Motor mit der Zug-Schub-Einrichtung mitbewegt wird. Ein hierfür verwendeter Motor kann beispielsweise ein Elektromotor sein, wodurch eine Fehleranfälligkeit reduziert ist. Ein weiterer Vorteil kann darin gesehen werden, dass ein mitbewegter Motor zur Wartung leicht zugänglich bzw. entnehmbar ist.

Es ist weiter zweckmäßig, wenn die Steighilfe über zumindest eine Umlenkrolle in ein Gehäuse bzw. aus einem Gehäuse geführt wird. Dadurch wird ein möglichst sanfter und verschleißfreier Betrieb ermöglicht.

Um zusätzlichen technischen Aufwand, wie beispielsweise eine hydraulische Vorrichtung, zu vermeiden, ist es vorteilhaft, wenn die Steighilfe beim Ein- bzw. Ausfahren unter Ausnützung der Schwerkraft um eine Achse gekippt wird.

Es ist weiter vorteilhaft, wenn die Steighilfe beim Ein- bzw. Ausfahren um die zumindest eine Umlenkrolle gekippt wird.

Die Erfindung wird im Weiteren detailliert erläutert. In den Zeichnungen, auf welche dabei Bezug genommen wird, zeigen:
Fig. 1 eine Seitenansicht einer erfindungsgemäßen Vorrichtung;
Fig. 2 eine Draufsicht auf eine erfindungsgemäße Vorrichtung.

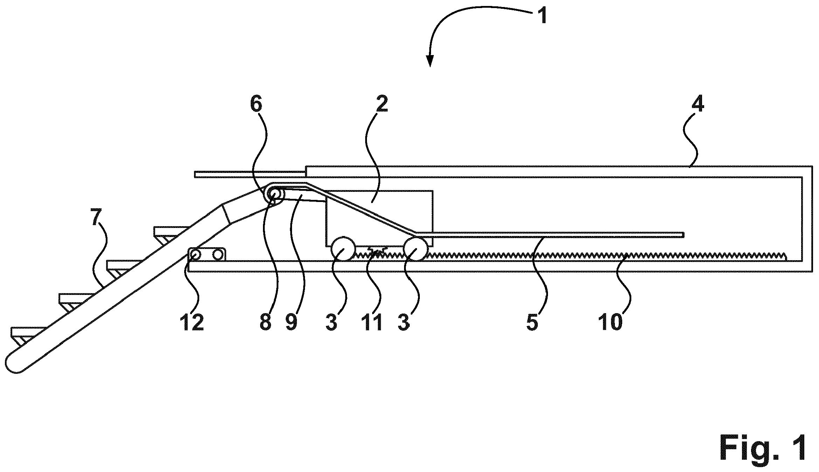

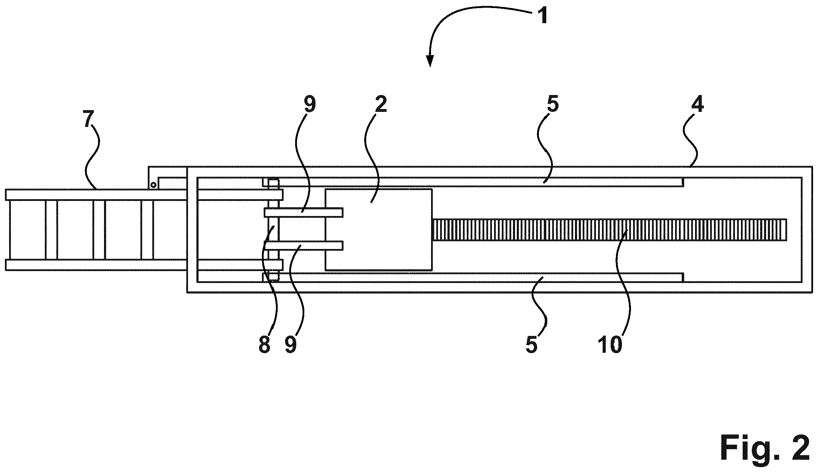

Eine Vorrichtung 1 gemäß Fig. 1 umfasst eine Zug-Schub-Einrichtung, welche in der in Fig. 1, 2 dargestellten Ausführungsform als Fahrgestell 2 ausgebildet ist. Das Fahrgestell 2 weist hierbei vier Räder 3 auf. Alternativ kann eine beliebige Anzahl an Rädern 3 vorgesehen bzw. die Zug-Schub-Einrichtung anders ausgebildet sein, wie etwa als Schlitten, welcher beispielsweise auf hierfür vorgesehenen Schienen verfahrbar ist. Das Fahrgestell 2 ist in der dargestellten Ausführungsform in einem Gehäuse 4 angeordnet, wobei jeweils an den Seitenflächen ein Führungselement positioniert ist, welches als Führungsschiene 5 ausgebildet ist. An einem Ende der Führungsschiene 5 ist ein Anschlag 6 vorgesehen, welcher ein zu weites Ausfahren der Steighilfe verhindert. Die Steighilfe ist hierbei als Treppe 7 ausgebildet. In dieser Ausführungsform ist die Treppe 7 über eine Drehwelle 8 mit einem Verbindungselement, welches als Zuglasche 9 ausgebildet ist, verbunden. Die Zuglasche 9 ist wiederum am Fahrgestell 2 gelenkig gelagert. Wie in Fig. 2 gestrichelt dargestellt, kann die Drehwelle 8 über die Steighilfe hinausragen und in die Führungsschienen 5 eingreifen und kann so bei ausgefahrener Treppe 7 vom Anschlag 6 zurückgehalten werden, wodurch die Treppe 7 gegen ein weiteres Ausfahren gesichert ist. Alternativ dazu können seitlich an der Steighilfe Bolzen oder andere Haltemittel vorgesehen sein, welche in die Führungsschienen 5 eingreifen.

In Fig. 2 ist ersichtlich, dass eine Zahnstange 10 etwa zentral im Gehäuse 4 angeordnet ist. In diese Zahnstange 10 kann ein Zahnrad 11, welches von einem vorgesehenen und nicht näher dargestellten Elektromotor angetrieben wird, eingreifen und somit den Elektromotor und das Fahrgestell 1 bewegen. Die Zahnstange 10 kann zwar grundsätzlich beliebig im Gehäuse 4 angeordnet sein. Um einen gleichmäßigen Antrieb zu gewährleisten, ist es allerdings vorteilhaft, wenn die Zahnstange 10 zentral im Gehäuse 4 und parallel zur gewünschten Bewegungsrichtung der Steighilfe angeordnet ist. Zur Kräfteverteilung können auch mehrere Zahnräder 11 und Zahnstangen 10 bzw. alternative Antriebsmittel und Vorschubelemente vorgesehen sein, wobei eine Anzahl an Antriebsmitteln zumindest einer Anzahl an Vorschubelementen entsprechen sollte.

An einem Ende des Gehäuses 4 ist eine Umlenkrolle 12 vorgesehen, über welche die Treppe 7 geführt und um welche die Treppe 7 gekippt wird.

In Fig. 1, 2 ist die Vorrichtung 1 mit ausgefahrener Treppe 7 dargestellt. Die Treppe 7 greift hierbei mit der Drehwelle 8 in die Führungsschiene 5 ein. Um die Treppe 7 einzufahren kann das Fahrgestell 1 mittels Motor weiter in das Gehäuse 4 hineinbewegt werden. Hierfür treibt der Motor das Zahnrad 11 an, welches das Fahrgestell 1 entlang des Vorschubelementes 10 bewegt. Da die Treppe 7 über Zuglaschen 9 mit dem Fahrgestell 1 verbunden ist, wird diese ebenfalls in das Gehäuse 4 eingezogen. Dabei wird die Treppe 7 durch die Führungsschienen 5 geführt, weshalb diese um die Umlenkrolle 12 kippt, bis die Treppe 7 schlussendlich in einer horizontalen Position im Gehäuse 4 verstaut ist.

Um die Treppe 7 auszufahren, wird das Fahrgestell 1 wie oben beschrieben in die entgegengesetzte Richtung bewegt, wodurch die Treppe 7 aus dem Gehäuse 4 geschoben wird. Sobald ein Schwerpunkt der Treppe 7 jenseits der Umlenkrolle 12 liegt, kippt die Treppe 7 unter Ausnutzung der Schwerkraft nach unten, wodurch einerseits die Treppe 7 zu Wasser gelassen werden kann und/oder andererseits auch eine Höhendifferenz überwunden werden kann.

## Patentansprüche

1. Vorrichtung (1) zur Bereitstellung einer Steighilfe, umfassend eine Steighilfe und eine translatorisch bewegbare Zug-Schub-Einrichtung, wobei die Steighilfe mit der Zug-Schub-Einrichtung in Verbindung steht, um die Steighilfe ein- und auszufahren, **dadurch gekennzeichnet, dass** die Zug-Schub-Einrichtung einen Motor aufweist, welcher mit einem Antriebsmittel verbunden ist.

2. Vorrichtung (1) nach Anspruch 1, **dadurch gekennzeichnet, dass** ein ortsfestes Vorschubelement vorgesehen ist, welches starr ausgebildet ist, wobei das Antriebsmittel mit dem Vorschubelement zusammenwirkt.

3. Vorrichtung (1) nach Anspruch 1 oder 2, **dadurch gekennzeichnet, dass** zumindest ein Führungselement zur Führung der Zug-Schub-Einrichtung und/oder der Steighilfe vorgesehen ist.

4. Vorrichtung (1) nach Anspruch 3, **dadurch gekennzeichnet, dass** die Steighilfe und/oder die Zug-Schub-Einrichtung in das zumindest eine Führungselement eingreift.

5. Vorrichtung (1) nach Anspruch 3 oder 4, **dadurch gekennzeichnet, dass** zumindest an einem Ende der Führungselemente ein Anschlag (6) vorgesehen ist.

6. Vorrichtung (1) nach einem der Ansprüche 1 bis 5, **dadurch gekennzeichnet, dass** zumindest eine Umlenkrolle (12) vorgesehen ist, welche zur Auflage der Steighilfe positioniert ist.

7. Vorrichtung (1) nach einem der Ansprüche 1 bis 6, **dadurch gekennzeichnet, dass** zumindest eine Lasche vorgesehen ist, welche oberhalb der Steighilfe positioniert ist.

8. Vorrichtung (1) nach einem der Ansprüche 1 bis 7, **dadurch gekennzeichnet, dass** eine Fixierung für die Steighilfe vorgesehen ist.

9. Vorrichtung (1) nach einem der Ansprüche 1 bis 8, **dadurch gekennzeichnet, dass** ein Gehäuse (4) vorgesehen ist, in welchem die Zug-Schub-Einrichtung angeordnet ist.

10. Vorrichtung (1) nach einem der Ansprüche 1 bis 9, **dadurch gekennzeichnet, dass** die Steighilfe unter Ausnützung der Schwerkraft um eine Achse kippbar ist.

11. Wasserfahrzeug mit einer Vorrichtung (1) nach einem der Ansprüche 1 bis 10.

12. Verfahren zum Ein- und Ausfahren einer Steighilfe, **dadurch gekennzeichnet, dass** eine Zug-Schub-Einrichtung mittels Motor translatorisch bewegt wird, wobei die Steighilfe gezogen bzw. geschoben wird und der Motor mit der Zug-Schub-Einrichtung mitbewegt wird.

13. Verfahren nach Anspruch 12, **dadurch gekennzeichnet, dass** die Steighilfe über zumindest eine Umlenkrolle (12) in ein Gehäuse (4) bzw. aus einem Gehäuse (4) geführt wird.

14. Verfahren nach Anspruch 12 oder 13, **dadurch gekennzeichnet, dass** die Steighilfe beim Ein- bzw. Ausfahren unter Ausnützung der Schwerkraft um eine Achse gekippt wird.

15. Verfahren nach einem der Ansprüche 12 bis 14, **dadurch gekennzeichnet, dass** die Steighilfe beim Ein- bzw. Ausfahren um die zumindest eine Umlenkrolle (12) gekippt wird.
